# EUROPÄISCHE PATENTSCHRIFT

(11) **EP 1 172 170 B1**
(45) Veröffentlichungstag und Bekanntmachung des Hinweises auf die Patenterteilung: **16.04.2003**
(21) Anmeldenummer: 01115357.4
(22) Anmeldetag: 26.06.2001
(51) Int. Cl.: B23K 37/047, B62D 65/00

(54) **Vorrichtung zum Wechseln von Spannrahmen in einer Bearbeitungsstation**
Apparatus for changing clamping frames in a machining station
Dispositif pour changer des cadres de fixation dans une station d'usinage

(30) Priorität: 12.07.2000 AT 12002000
(43) Veröffentlichungstag der Anmeldung: 16.01.2002
(73) Patentinhaber: TMS Produktionssysteme GmbH, 4031 Linz (AT)
(72) Erfinder: Kreuzgruber, Dietrich, 4060 Leonding (AT)
(74) Vertreter: VA TECH Patente GmbH & Co

(56) Entgegenhaltungen:
- EP-A- 0 642 878
- EP-A- 0 903 197
- WO-A-99/54083
- US-A- 5 400 944

## Beschreibung

Die vorliegende Erfindung betrifft eine Vorrichtung zum Zuführen, Positionieren und Schweißen von Teilen einer Fahrzeugkarosserie in einer Bearbeitungsstation einer Fertigungsstraße, bei welcher zum Zuführen und/oder Positionieren der Karosserieteile zu beiden Seiten der Fertigungsstraße zumindest je ein auswechselbarer Spannrahmen vorgesehen ist, wobei jeder Spannrahmen quer zur Fertigungsstraße verschiebbar und eventuell anhebbar angeordnet ist und zum Aufbewahren von Spannrahmen zumindest ein Spannrahmenmagazin vorgesehen ist, zur Bewegung der Spannrahmen in Richtung parallel zur Fertigungsstraße zu beiden Seiten der Bearbeitungsstation entlang einer Führungseinheit, beispielsweise eine Schiene, bewegbare Längsschlitten vorgesehen sind, an welchen ein lösbarer und verriegelbarer Spannrahmen aufnehmbar ist, zur Bewegung der Spannrahmen in Richtung quer zur Fertigungsstraße je ein angetriebener Querschlitten vorgesehen ist, welcher quer zur Fertigungsstraße verschiebbar ist, und an welchem ein lösbarer und verriegelbarer Spannrahmen aufnehmbar ist und in unmittelbarer Nähe der Bearbeitungsstation eine Übergabeposition zur Übergabe des Spannrahmens vom Längsschlitten auf den Querschlitten und umgekehrt vorgesehen ist (Siehe, zum Beispiel, EP-A.0903 197).

Vorrichtungen der oben genannten Art sind bekannt und dienen dazu, an ein und derselben Fertigungsstraße zwei oder mehr unterschiedliche Karosserietypen fertigen zu können. Zu diesem Zweck müssen bei jedem Typenwechsel auch Spannrahmen gewechselt werden. Spannrahmen, die gerade nicht benötigt werden, müssen an bestimmten Stellen aufbewahrt werden.

In der EP-A-642 878 ist eine Einrichtung zum Wechseln von Spannrahmen beschrieben, bei welcher jeder Spannrahmen mit einem Fahrwerk ausgestattet ist, welches entlang einer Führungseinheit in Fertigungsrichtung verfahrbar ist. Im Bereich der Zuführung und Positionierung von Karosserieteilen weist die Führungseinheit zwei quer zur Fertigungsrichtung verfahrbare Abschnitte auf, mittels welchen der Spannrahmen mit seinem Fahrgestell in die Arbeitsposition verfahren werden kann. Die Spannrahmen weisen jedoch ein hohes Gewicht auf und sind mit vergleichsweise hohen Herstellungskosten verbunden.

In der DE-OS 3 606 058 werden Spannrahmen, die von der Bearbeitungsstation gerade nicht benötigt werden, an dem vorderen und hinteren Ende der Bearbeitungsstation zu beiden Seiten der Fertigungsstraße in je einem Viertelkreis am Boden aufgestellt. Ein Nachteil dieser Anordnung liegt unter anderem darin, daß zur Aufbewahrung der Spannrahmen vergleichsweise viel Platz beansprucht wird. Ferner ist die Anzahl der aufbewahrten Spannrahmen begrenzt, da in Richtung Fertigungsstraße und in Richtung quer zur Bearbeitungsstation keine Spannrahmen aufgestellt werden können, um die Zufuhr von Karosserieteilen nicht zu behindern.

Eine weitere Möglichkeit zur Aufbewahrung von Spannrahmen ist beispielsweise in der WO 92/19486 geoffenbart. Bei der darin beschriebenen Vorrichtung können 3 unterschiedliche Spannrahmen auf einem Trommelmagazin angeordnet werden, welches vor oder nach der Bearbeitungsstation angeordnet ist und je nach Bedarf den gewünschten Spannrahmen bereitstellt. Auch bei dieser Lösung entstehen durch das Trommelmagazin ein erhöhter Platzverbrauch und konstruktionsbedingt erhöhte Herstellungskosten. Überdies ist bei dem gezeigten Ausführungsbeispiel die Kapazität des Trommelmagazins auf 3 Spannrahmen begrenzt.

Bei der DE-OS 2 810 822 ist eine Einrichtung vorgesehen, bei welcher die in Richtung Fertigungsstraße ausgerichteten Spannrahmen seitlich nebeneinander angeordnet werden und über einen Paternoster-Transportmechanismus an das gegenüberliegende Ende der Fertigungsstraße transportiert werden. Bei dieser Einrichtung wird sowohl durch die Ablage der Spannrahmen als auch durch den außen um die Schweißroboter geführte Patemoster-Transportmechanismus ein erhöhter Platzverbrauch realisiert. Weiters ergeben sich bei dieser Einrichtung lange Transportwege für die Spannrahmen und demnach auch ein erhöhter Zeitaufwand beim Spannrahmenwechsel.

In der EP-A2 296 369 ist eine Vorrichtung zum automatischen Fördern von Spannrahmen in Transferstraßen geoffenbart, bei welcher zu beiden Seiten der Transferstraße jeweils vor und hinter der Bearbeitungsstation je 2 Spannrahmen angeordnet sind, welche zu beiden Seiten der Transferstraße auf je 2 ortsfesten Führungen in Längsrichtung bewegbar sind. Bei dieser Einrichtung ist einerseits die Anzahl der verfügbaren Spannrahmen von der Anzahl der Führungseinrichtungen abhängig, so daß sich auf Grund der Vervielfachung von Führungseinrichtungen ein unerwünschter Mehraufwand und demnach Mehrkosten ergeben. Ferner ist bei einer entsprechenden Anzahl von Spannrahmen und Führungseinrichtungen mit einem erheblichen Platzverbrauch zu rechnen.

Aus der WO 99/54083 A1 geht eine Bearbeitungsstation hervor, bei der einzelne Schlitten durch eine starre Verbindung miteinander zu einer Schlitteneinheit verbunden werden, wobei an Schwenkarmen dieser Schlitteneinheit eine Haltevorrichtung zur Aufnahme eines Spannrahmens angebracht ist. Die Schlitteneinheit kann dabei nur gemeinsam zwischen einem Spannrahmenmagazin und der Bearbeitungsstation bewegt werden. Auf jeder Seite der Bearbeitungsstation kommt dabei höchstens eine dieser Schlitteneinheiten zum Einsatz.

Eine eventuell erforderliche Querbewegung der Haltevorrichtung erfolgt dabei durch das Verschwenken der Schwenkarme der Schlitteneinheit.

In der EP-A1 903 197 ist eine Vorrichtung gemäß dem Oberbegriff der vorliegenden Erfindung geoffenbart. Vor und hinter einer Bearbeitungsstation sind Spannrahmenmagazine zur Aufnahme von Spannrahmen in der Form von Hochregallagern angeordnet und aus den Magazinen kann auf jeder Seite der Fertigungsstraße ein Spannrahmen mittels Längs- und Querschlitten in eine Arbeitsposition in der Bearbeitungsstation gebracht werden. Auf einem Längsschlitten können hier gleichzeitig zwei Spannrahmen plaziert werden und der Längsschlitten ist so verfahrbar, dass immer eine der beiden Aufnahmepositionen für Spannrahmen am Längsschlitten an einer Übergabeposition im Bereich der Bearbeitungsstation und die andere an einer Position zum Spannrahmenwechsel im Bereich eines Magazins zu stehen kommt. Bei dieser Vorrichtung ergibt sich aufgrund der Form der Hochregallager eine große Bauhöhe. Weiters befindet sich ein Teil des Längsschlittens ständig vor der Bearbeitungsstation, die deshalb nie vollkommen frei zugänglich ist.

Die Aufgabe der vorliegenden Erfindung ist es deshalb eine Vorrichtung zum Wechseln von Spannrahmen anzugeben, die sehr flexibel betrieben werden kann, Spannrahmen sehr rasch gewechselt werden können und die Möglichkeit bietet die Bearbeitungsstation frei zugänglich zu machen, sowie mit platzsparenden Spannrahmenmagazinen ausgestattet werden kann.

Die oben gestellte Aufgabe wurde erfindungsgemäß dadurch gelöst, dass in Richtung der Fertigungsstraße zumindest auf einer Seite der Bearbeitungsstation zwei unabhängig von einander antreibbare und ansteuerbare, entlang der Führungseinheit in Richtung der Fertigungsstraße von einander unabhängig bewegbare Längsschlitten vorgesehen sind und die beiden Längsschlitten aus dem Bereich der Bearbeitungsstation verfahrbar sind. Dadurch, dass die Längsschlitten unabhängig voneinander bewegt werden können ist es möglich beide aus dem Bereich der Bearbeitungsstation zu verfahren, wodurch diese ungehindert zugänglich wird. Damit kann der Bewegungsspielraum von Manipulatoren und Bearbeitungsrobotem bzw. des Instandhaltungspersonals, die in der Bearbeitungsstation eine beliebige Tätigkeit ausführen vergrößert werden, wodurch unter Umständen auch zusätzliche platzaufwendigere Arbeitsschritte in der selben Bearbeitungsstation durchgeführt werden können.
Die Längsschlitten können vollkommen unabhängig voneinander, insbesondere auch asynchron zueinander, verfahren werden, was die Flexibilität beim Spannrahmenwechsel erhöht.

In einer Vorrichtung zum Wechseln von Spannrahmen ist es günstig zumindest auf einer Seite der Bearbeitungsstation in Richtung der Fertigungsstraße vor oder hinter der Bearbeitungsstation ein Spannrahmenmagazin zu haben und im Bereich des Spannrahmenmagazins eine Spannrahmenwechselposition vorzusehen, an welcher ein nicht mehr benötigter Spannrahmen vom Längsschlitten in das Spannrahmenmagazin zur Aufbewahrung übernommen werden kann und/oder ein beliebiger Spannrahmen vom Spannrahmenmagazin an den Längsschlitten übergegeben werden kann. Dadurch können momentan nicht benötigte Spannrahmen bis zu ihrem nächsten Einsatz gespeichert aufbewahrt werden.

Ein besonders günstiges und kompaktes Spannrahmenmagazin erhält man, wenn man es als ein mehrstöckiges Hochregallager ausbildet, bei welchem auf jeder Ebene quer zur Fertigungsstraße zumindest ein Speicherplatz für Spannrahmen vorgesehen ist und jede Ebene zumindest eine Einrichtung zum Verschieben der Spannrahmen quer und/oder längs zur Fertigungsstraße aufweist. Weiters ist es günstig für ein Hochregallager, wenn das Hochregallager eine Einrichtung, beispielsweise eine Hebebühne oder ein Hubtisch, aufweist mit der ein Spannrahmen aus einer Hebeposition einer beliebigen Ebene in die Hebeposition einer beliebigen anderen Ebene anhebbar oder absenkbar ist. Außerdem ist es vorteilhaft, wenn das Spannrahmenmagazin auf jeder Ebene oberhalb oder unterhalb der Ebene die sich auf gleicher Höhe mit der Spannrahmenwechselposition befindet, eine Einrichtung zum Verschieben der Spannrahmen aus einer Hebeposition quer zur Fertigungsstraße zur Fertigungsstraße hin und/oder unabhängig davon eine weitere Einrichtung zum Verschieben der Spannrahmen aus einer Hebeposition quer zur Fertigungsstraße von der Fertigungsstraße weg aufweist, diese Antriebe unabhängig von einander angetrieben und gesteuert werden können und quer zur Fertigungsstraße vor und/oder hinter der Hebeposition zumindest ein Speicherplatz für Spannrahmen vorgesehen ist. Durch diese Ausführungsformen erhält man ein Spannrahmenmagazin, welches eine sehr kompakte Bauweise aufweist und darüber hinaus einen Spannrahmenwechsel sehr rasch durchführen kann, da die Wege die ein Spannrahmen dabei im Magazin zurückzulegen hat sehr kurz gehalten werden.

Als ganz besonders vorteilhaft erweist es sich, wenn auf jeder Seite der Bearbeitungsstation in Richtung der Fertigungsstraße vor und hinter der Bearbeitungsstation je ein Spannrahmenmagazin angeordnet ist. Dadurch ergibt sich eine größtmögliche Flexibilität beim Spannrahmenwechsel, da man eine große Speicherkapazität von Spannrahmen zur Verfügung hat.

Eine Einsparung in der Baubreite lässt sich erreichen, indem sich das Spannrahmenmagazin zu beiden Seiten der Schiene erstreckt.

Eine besonders flexible Ausführungsform erhält man, wenn jeder Längsschlitten einzeln zwischen der Spannrahmenwechselposition eines Spannrahmenmagazins und der Übergabeposition hin- und herbewegbar ist, da dadurch auch asynchrone Bewegungen möglich sind. Diese Flexibilität wird noch weiter erhöht, wenn die Längsschlitten unabhängig von einander aus dem Bereich der Bearbeitungsstation in die jeweilige Spannrahmenwechselpositionen verfahrbar sind, sodass die Bearbeitungsstation ungehindert zugänglich ist.

Um die Anforderungen an die Genauigkeit der Antriebe der Längs- und Querschlitten niedrig halten zu können ist es vorteilhaft, wenn in der Bearbeitungsstation zu beiden Seiten je eine Arbeitsposition für den Spannrahmen vorgesehen ist, an welcher der Spannrahmen mit der Bearbeitungsstation exakt ausgerichtet und an dieser verankert ist. Dazu ist es weiters günstig, wenn der Spannrahmen aus der Übergabeposition mit dem Querschlitten in die Arbeitsposition, und umgekehrt, verfahrbar ist.

Eine ganz besonders einfache konstruktive Ausführungsform kann dadurch erzielt werden, dass jeder Spannrahmen eine Energieversorgung, z.B. für elektrische u. hydraulische od. pneumatische Energie aufweist, welche bei Übergabe des Spannrahmens von dem Längsauf den Querschlitten über eine Kupplung, z.B. eine Multikupplung, an den Querschlitten ankoppelbar ist.

Wenn die Vorrichtung eine Steuereinrichtung für die Spannrahmenmagazine und für die Längsschlitten aufweist, die für einen zeitlich optimierten Ablauf eines Spannrahmenwechsels sorgt, kann die Zeit für einen Spannrahmenwechsel verkürzt werden.

Die Erfindung wird im folgenden anhand der beiliegenden nicht einschränkenden und beispielhaften Zeichnungen beschrieben.

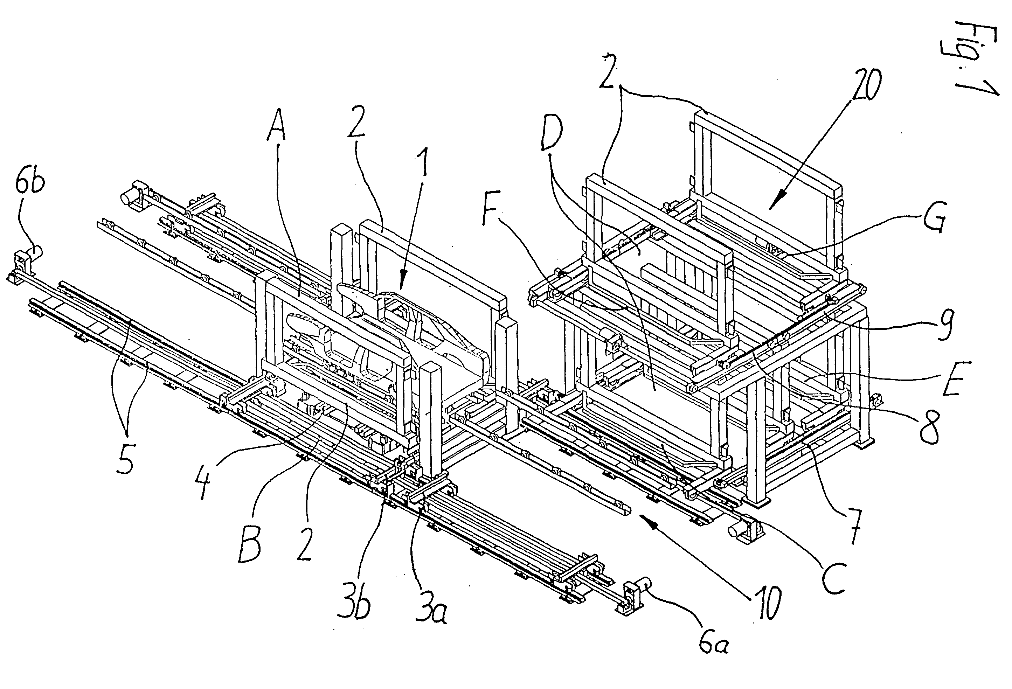

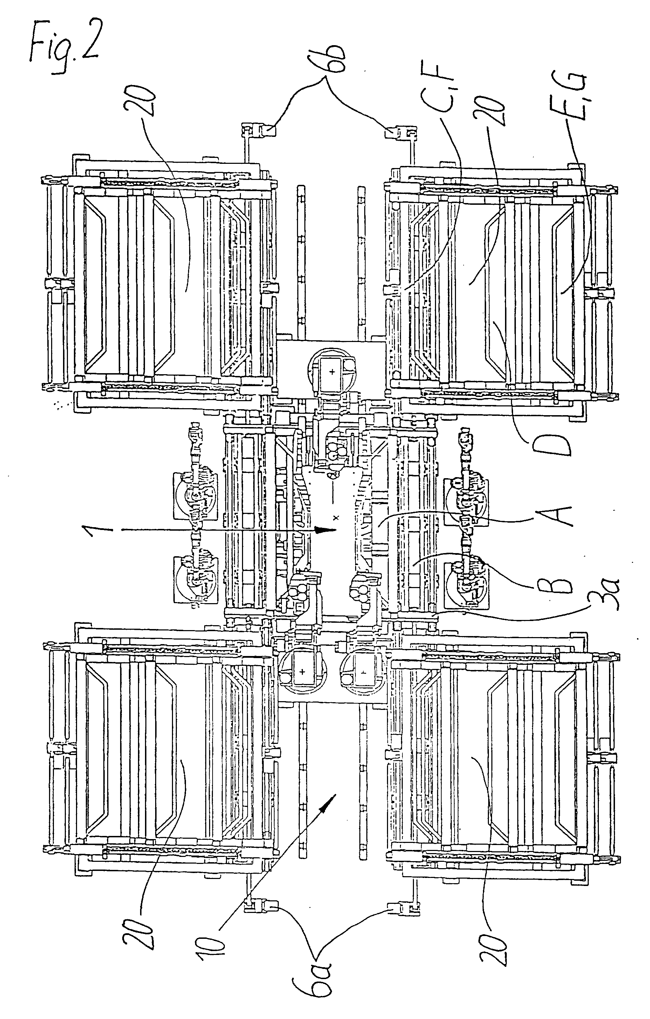

In den Figuren 1 und 2 ist eine Vorrichtung zum Zuführen, Positionieren und Schweißen von Teilen einer Fahrzeugkarosserie in einer Bearbeitungsstation 1, beispielsweise eine Schweißstation, einer Fertigungsstraße 10 in unterschiedlichen Ansichten dargestellt. Fig. 1 zeigt eine perspektivische Darstellung der Fertigungsstraße 10, wobei der Einfachheit halber nur ein Spannrahmenmagazin 20 zu sehen ist. Fig. 2 zeigt eine Draufsicht der Fertigungsstraße 10.

Die Vorrichtung weist eine Bearbeitungsstation 1 auf, die nur schematisch dargestellt ist. Zu beiden Seiten der Bearbeitungsstation 1 sind Führungseinheiten 5, vorzugsweise Schienen, angeordnet, auf denen zwei Längsschlitten 3a und 3b zwischen einer Übergabeposition B im Bereich der Bearbeitungsstation 1 und einer Spannrahmenwechselposition C im Bereich des Spannrahmenmagazins 20 verfahrbar sind. Jeder der Längsschlitten 3a und 3b besitzt einen eigenen Antrieb 6a und 6b und kann daher unabhängig entlang der Führungseinheiten 5 bewegt werden. Weiters weist die Vorrichtung zu jeder Seite der Bearbeitungsstation 1 einen Querschlitten 4 auf, der durch einen nicht dargestellten Antrieb im Bereich der Bearbeitungsstation 1 zwischen der Übergabeposition B und einer Arbeitsposition A verfahrbar ist. Jeder der Längsschlitten 3a, 3b und der Querschlitten 4 kann einen Spannrahmen 2 aufnehmen und besitzt eine Einrichtung mit der der Spannrahmen 2 am Schlitten verriegelt und gelöst werden kann. Weiters verfügen die Längsschlitten 3a, 3b und die Querschlitten 4 über eine Einrichtung zur Übergabe bzw. Übernahme eines Spannrahmens 2. Zur Versorgung des Spannrahmens 2 mit Energie (elektrisch, hydraulisch, z.B. mittels Wasser, und/oder pneumatisch) ist weiters an dem Querschlitten 4 eine entsprechende nicht dargestellte Kupplung, z.B. eine Multikupplung vorgesehen, welche automatisch bei Übernahme des Spannrahmens 2 von dem Längsschlitten 3a, 3b betätigt wird.

Auf jeder Seite der Fertigungsstraße 10 ist vor und nach der Bearbeitungsstation 1 ein Spannrahmenmagazin 20, in Form eines Hochregallagers, angeordnet. Jedem Hochregallager 20 ist dabei einer der Längsschlitten 3a, 3b zugeordnet. Das Hochregallager 20 weist zwei Ebenen zum Speichern von Spannrahmen 2 auf. Die untere Ebene besitzt einen Antrieb 7 mit dem ein Spannrahmen 2 von der Spannrahmenwechselposition C in eine Hebeposition D oder einen Speicherplatz E, bzw. umgekehrt, verfahren werden kann. Die obere Ebene weist zwei von einander unabhängige Antriebe 8 und 9 auf mit denen ein Spannrahmen 2 von der Hebeposition D quer zur Fertigungsstraße 10 in einen der beiden Speicherplätze F, G verfahren werden kann. In der Hebeposition D kann ein Spannrahmen 2 durch eine nicht dargestellte Hebeeinrichtung, beispielsweise einer Hebebühne oder ein Hubtisch, von einer beliebigen Ebene in eine andere beliebige Ebene des Hochregallagers 20 angehoben bzw. abgesenkt werden.

Im Betrieb wird ein Längsschlitten 3b in die Spannrahmenwechselposition C gebracht. Befindet sich auf dem Längsschlitten 3b ein Spannrahmen 2, so wird dieser vom Längsschlitten 3b in das Spannrahmenmagazin 20 übernommen und mittels der Antriebe 7, 8, 9 und gegebenenfalls der Hebeeinrichtung in einen freien Speicherplatz E, F oder G befördert. Auf den leeren Längsschlitten 3b kann jetzt in umgekehrter Reihenfolge aus einem der Speicherplätze E, F oder G der benötigte Spannrahmen 2 befördert werden.
Falls sich in der Bearbeitungsstation 1 momentan bereits ein Spannrahmen 2 befindet, wird gewartet bis der entsprechende Arbeitsschritt beendet wurde und der Spannrahmen 2 aus der Bearbeitungsstation 1 entfernt wurde. Dazu wird der sich auf dem Querschlitten 4 befindliche Spannrahmen 2 aus der Arbeitsposition A in die Übergabeposition B verfahren, wo der Spannrahmen vom Querschlitten 4 auf den wartenden, leeren Längsschlitten 3a übergeben wird. Der Längsschlitten 3a wird daraufhin in die Spannrahmenwechselposition C seines zugeordneten Spannrahmenmagazins verfahren, wo wiederum ein wie oben beschriebener Spannrahmenwechsel stattfinden kann. Der Längsschlitten 3b mit dem erforderlichen Spannrahmen 2 wird jetzt von der Spannrahmenwechselposition C in die Übergabeposition B verfahren, wo der Spannrahmen vom wartenden Querschlitten 4 übernommen und die Arbeitsposition A gebracht wird. Wenn sich ein Spannrahmen 2 in der Arbeitsposition A befinden ist es auch möglich beide Längsschlitten 3a, 3b leer zu verfahren, wodurch es möglich wird, den nächsten Spannrahmen entweder aus dem vorderen oder hinteren Spannrahmenmagazin 20 zu holen.
Es ist auch möglich, dass die beiden Längsschlitten 3a, 3b mit jeweils einem Spannrahmen 2 gleichzeitig in die gleiche Richtung bewegt werden. Weiters können von den Spannrahmenmagazinen 20 natürlich bereits im voraus die richtigen Spannrahmen 2 bereitgestellt werden, um die Zeiten für einen Spannrahmenwechsel in der Bearbeitungsstation weiter zu verkürzen. Es ist insbesondere die Aufgabe der Steuerung der Schlitten und der Spannrahmenmagazine 20 den Tausch der Spannrahmen 2 so weit wie möglich zu optimieren und kurz zu halten.
Die im Spannrahmen 2 zu haltenden Karosserieteile können an einer beliebigen Stelle zugeführt werden. Eine günstige Position dafür wäre zum Beispiel die Übergabeposition B, bevor der Spannrahmen 2 an den Querschlitten 4 übergeben wird. Es ist aber auch jede andere Position denkbar.
Durch die Möglichkeit beide Längsschlitten 3a, 3b getrennt voneinander zu bewegen, können beide aus dem Bereich der Bearbeitungsstation 1 gefahren werden, wodurch diese frei zugänglich wird. Damit ist es zum Beispiel möglich zuerst lose Karosserieteile, die im Spannrahmen 2 fixiert sind, an die Karosserie die sich in der Bearbeitungsstation 1 befindet zu heften, beispielsweise durch Punktschweißen, danach den leeren Spannrahmen mit den Querschlitten 4 und Längsschlitten 3a oder 3b aus dem Bereich der Bearbeitungsstation 1 zu verfahren und danach ungehindert mit Schweißrobotern die vorher gehefteten Teile zu verschweißen.

Die vorliegenden Figuren und die obigen Besehreibungen sind lediglich beispielhaft und in keiner Weise einschränkend. Insbesondere sind alle Einrichtung zum Bewegen der Schlitten, zum Verriegeln und Lösung der Spannrahmen auf den Schlitten, zur Übergabe bzw. Übernahme von Spannrahmen an bzw. vo einem Schlitten, zum Fixieren der Spannrahmen in der Arbeitsposition und zum Anheben von Spannrahmen im Spannrahmenmagazin umfasst.

## Patentansprüche

1. Vorrichtung zum Zuführen, Positionieren und Schweißen von Teilen einer Fahrzeugkarosserie in einer Bearbeitungsstation (1) einer Fertigungsstraße (10), bei welcher zum Zuführen und/oder Positionieren der Karosserieteile zu beiden Seiten der Fertigungsstraße (10) zumindest je ein auswechselbarer Spannrahmen (2) vorgesehen ist, wobei jeder Spannrahmen (2) quer zur Fertigungsstraße (10) verschiebbar und eventuell anhebbar angeordnet ist und zum Aufbewahren von Spannrahmen (2) zumindest ein Spannrahmenmagazin (20) vorgesehen ist, zur Bewegung der Spannrahmen (2) in Richtung parallel zur Fertigungsstraße (10) zu beiden Seiten der Bearbeitungsstation (1) entlang einer Führungseinheit (5), beispielsweise eine Schiene, bewegbare Längsschlitten (3a, 3b) vorgesehen sind, an welchen ein lösbarer und verriegelbarer Spannrahmen (2) aufnehmbar ist, zur Bewegung der Spannrahmen (2) in Richtung quer zur Fertigungsstraße (10) je ein angetriebener Querschlitten (4) vorgesehen ist, welcher quer zur Fertigungsstraße (10) verschiebbar ist, und an welchem ein lösbarer und verriegelbarer Spannrahmen (2) aufnehmbar ist und in unmittelbarer Nähe der Bearbeitungsstation (1) eine Übergabeposition (B) zur Übergabe des Spannrahmens (2) vom Längsschlitten (3a, 3b) auf den Querschlitten (4) und umgekehrt vorgesehen ist, **dadurch gekennzeichnet, dass** in Richtung der Fertigungsstraße (10) zumindest auf einer Seite der Bearbeitungsstation (1) zwei unabhängig von einander antreibbare und ansteuerbare, entlang der Führungseinheit (5) in Richtung der Fertigungsstraße (10) von einander unabhängig bewegbare Längsschlitten (3a, 3b) vorgesehen sind, wobei jeder Längsschlitten zur Aufnahme eines einzelnen Spannrahmens (2) eingerichtet ist und die beiden Längsschlitten (3a, 3b) aus dem Bereich der Bearbeitungsstation (1) verfahrbar sind.

2. Vorrichtung nach Anspruch 1, **dadurch gekennzeichnet, dass** zumindest auf einer Seite der Bearbeitungsstation (1) in Richtung der Fertigungsstraße (10) vor und/oder hinter der Bearbeitungsstation (1) ein Spannrahmenmagazin (20) angeordnet ist und im Bereich des Spannrahmenmagazins (20) eine Spannrahmenwechselposition (C) vorgesehen ist, an welcher ein nicht mehr benötigter Spannrahmen (2) vom Längsschlitten (3a, 3b) in das Spannrahmenmagazin (20) zur Aufbewahrung übernommen werden kann und/oder ein beliebiger Spannrahmen (2) vom Spannrahmenmagazin (20) an den Längsschlitten (3a, 3b) übergegeben werden kann.

3. Vorrichtung nach Anspruch 2, **dadurch gekennzeichnet, dass** das Spannrahmenmagazin (20) als ein ein- oder mehrstöckiges Hochregallager ausgebildet ist, bei welchem auf jeder Ebene zumindest ein Speicherplatz (E, F, G) für Spannrahmen (2) vorgesehen ist und jede Ebene zumindest eine Einrichtung zum Verschieben der Spannrahmen (2) quer und/oder längs zur Fertigungsstraße (10) aufweist.

4. Vorrichtung nach Anspruch 3, **dadurch gekennzeichnet, dass** sich das Spannrahmenmagazin (20) - in Richtung der Fertigungsstrasse gesehen - zu beiden Seiten der Führungseinheit (5) erstreckt.

5. Vorrichtung nach Anspruch 3 oder 4, **dadurch gekennzeichnet, dass** das Spannrahmenmagazin (20) eine Einrichtung, vorzugsweise eine Hebebühne oder ein Hubtisch, aufweist mit der ein Spannrahmen (2) aus einer Hebeposition (D) einer beliebigen Ebene in die Hebeposition (D) einer beliebigen anderen Ebene anhebbar oder absenkbar ist.

6. Vorrichtung nach Anspruch 5, **dadurch gekennzeichnet, dass** das Spannrahmenmagazin (20) auf jeder Ebene oberhalb oder unterhalb der Ebene die sich auf gleicher Höhe mit der Spannrahmenwechselposition (C) befindet, eine Einrichtung zum Verschieben (8) der Spannrahmen (2) aus einer Hebeposition (D) quer zur Fertigungsstraße (10) zur Fertigungsstraße (10) hin und/oder unabhängig davon eine weitere Einrichtung zum Verschieben (9) der Spannrahmen (2) aus einer Hebeposition (D) quer zur Fertigungsstraße (10) von der Fertigungsstraße (10) weg aufweist, diese Antriebe (8, 9) unabhängig von einander angetrieben und gesteuert werden können und quer zur Fertigungsstraße (10) vor und/oder hinter der Hebeposition (D) zumindest ein Speicherplatz (F, G) für Spannrahmen (2) vorgesehen ist.

7. Vorrichtung nach Anspruch 6, **dadurch gekennzeichnet, dass** auf jeder Seite der Bearbeitungsstation (1) in Richtung der Fertigungsstraße (10) vor und hinter der Bearbeitungsstation (1) je ein Spannrahmenmagazin (20) angeordnet ist.

8. Vorrichtung nach einem der vorigen Ansprüche, **dadurch gekennzeichnet, dass** jeder Längsschlitten (3a, 3b) einzeln zwischen der Spannrahmenwechselposition (C) eines Spannrahmenmagazins (20) und der Übergabeposition (B) hin- und herbewegbar ist.

9. Vorrichtung nach Anspruch 8, **dadurch gekennzeichnet, dass** die Längsschlitten (3a, 3b) unabhängig von einander aus dem Bereich der Bearbeitungsstation (1) in die jeweilige Spannrahmenwechselpositionen (C) verfahrbar sind, sodass die Bearbeitungsstation (1) ungehindert zugänglich ist.

10. Vorrichtung nach Anspruch 9, **dadurch gekennzeichnet, dass** in der Bearbeitungsstation (1) zu beiden Seiten je eine Arbeitsposition (A) für den Spannrahmen (2) vorgesehen ist, an welcher der Spannrahmen (2) mit der Bearbeitungsstation (1) exakt ausgerichtet und an dieser verankert ist.

11. Vorrichtung nach Anspruch 10, **dadurch gekennzeichnet, dass** der Spannrahmen (2) aus der Übergabeposition (B) mit dem Querschlitten (4) in die Arbeitsposition (A), und umgekehrt, verfahrbar ist.

12. Vorrichtung nach Anspruch 11, **dadurch gekennzeichnet, dass** jeder Spannrahmen (2) eine Energieversorgung, z.B. für elektrische und hydraulische oder pneumatische Energie aufweist, welche bei Übergabe des Spannrahmens (2) von dem Längs- (3a, 3b) auf den Querschlitten (4) über eine Kupplung, z.B. eine Multikupplung, an den Querschlitten (4) ankoppelbar ist.

13. Vorrichtung nach Anspruch 12, **dadurch gekennzeichnet, dass** eine Steuereinrichtung für die Spannrahmenmagazine (20) und für die Längsschlitten (3a, 3b) vorgesehen ist, mittels welcher ein zeitlich optimierter Ablauf eines Spannrahmenwechsels steuerbar ist.

## Claims

1. Apparatus for feeding, positioning and welding parts of a vehicle bodywork in a machining station (1) of a production line (10), in which at least one replaceable clamping frame (2) is provided on each of the two sides of the production line (10), for feeding and/or positioning bodywork parts, each clamping frame (2) being displaceable transversely with respect to the production line (10) and possibly being arranged so as to be raisable, and at least one clamping frame magazine (20) is provided for storing clamping frames (2), movable longitudinal carriages (3a, 3b) on which a detachable and lockable clamping frame (2) can be held are provided for moving the clamping frames (2) in a direction parallel to the production line (10) on both sides of the machining station (1) along a guide unit (5), for example a rail, one driven transverse carriage (4) each which is displaceable transversely with respect to the production line (10) and on which a detachable and lockable clamping frame (2) can be held is provided for moving the clamping frame (2) in a direction transverse to the production line (10), and a transfer position (B) for transferring the clamping frame (2) from the longitudinal carriage (3a, 3b) to the transverse carriage (4) and vice versa is provided in the immediate vicinity of the machining station (1), **characterized in that** two longitudinal carriages (3a, 3b) drivable and actuatable independently of one another and movable independently of one another along the guide unit (4) in the direction of the production line (10) are provided in the direction of the production line (10), at least on one side of the machining station (1), each longitudinal carriage being set up for holding an individual clamping frame (2) and the two longitudinal carriages (3a, 3b) being capable of travelling out of the region of the machining station (1).

2. Apparatus according to Claim 1, **characterized in that** a clamping frame magazine (20) is arranged at least on one side of the machining station (1) before and/or behind the machining station (1) in the direction of the production line (10), and a clamping frame change position (C) at which a clamping frame (2) which is no longer required can be transferred from the longitudinal carriage (3a, 3b) into the clamping frame magazine (20) for storage and/or any desired clamping frame (2) can be transferred from the clamping frame magazine (20) to the longitudinal carriage (3a, 3b) is provided in the region of the clamping frame magazine (20).

3. Apparatus according to Claim 2, **characterized in that** the clamping frame magazine (20) is in the form of a single-storey or multistorey high-bay rack in which at least one storage place (E, F, G) for clamping frames (2) is provided on each level, and each level has at least one device for moving the clamping frames (2) transversely and/or longitudinally with respect to the production line (10).

4. Apparatus according to Claim 3, **characterized in that** the clamping frame magazine (20) - viewed in the direction of the production line - extends on both sides of the guide unit (5).

5. Apparatus according to Claim 3 or 4, **characterized in that** the clamping frame magazine (20) has a device, preferably a lifting platform or a lifting table, with which a clamping frame (2) can be raised or lowered from a lifting position (D) of any desired level to the lifting position (D) of any other desired level.

6. Apparatus according to Claim 5, **characterized in that** the clamping frame magazine (20) on each level above or below the level which is at the same height as the clamping frame change position (C) has a device for moving (8) the clamping frames (2) from a lifting position (D) transversely with respect to the production line (10) towards the production line (10) and/or, independently thereof, a further device for moving (9) the clamping frames (2) from a lifting position (D) transversely with respect to the production line (10) away from the production line (10), these drives (8, 9) can be driven and controlled independently of one another, and at least one storage place (F, G) for clamping frames (2) is provided transversely with respect to the production line (10) before and/or behind the lifting position (D).

7. Apparatus according to Claim 6, **characterized in that** one clamping frame magazine (20) is arranged on each side of the machining station (1) before and behind the machining station (1) in the direction of the production line (10).

8. Apparatus according to any of the preceding Claims, **characterized in that** each longitudinal carriage (3a, 3b) can be moved individually back and forth between the clamping frame change position (C) of a clamping frame magazine (20) and the transfer position (B).

9. Apparatus according to Claim 8, **characterized in that** the longitudinal carriages (3a, 3b) are capable of travelling, independently of one another, from the region of the machining station (1) to the respective clamping frame change positions (C), so that the machining station (1) is accessible without hindrance.

10. Apparatus according to Claim 9, **characterized in that** a work position (A) for the clamping frame (2) is provided on both sides in the machining station (1), at which position the clamping frame (2) is exactly aligned with the machining station (1) and is anchored to said station.

11. Apparatus according to Claim 10, **characterized in that** the clamping frame (2) is capable of travelling from the transfer position (B) with the transverse carriage (4) to the work position (A), and vice versa.

12. Apparatus according to Claim 11, **characterized in that** each clamping frame (2) has a power supply, e.g. for electrical and hydraulic or pneumatic power, which can be coupled via a coupling, for example a multicoupling, to the transverse carriage (4) on transfer of the clamping frame (2) from the longitudinal carriage (3a, 3b) to the transverse carriage (4).

13. Apparatus according to Claim 12, **characterized in that** a control device for the clamping frame magazines (20) and for the longitudinal carriages (3a, 3b) is provided, by means of which device a clamping frame change sequence optimized with respect to time can be controlled.

## Revendications

1. Dispositif pour amener, positionner et souder des pièces d'une carrosserie de véhicule dans un poste d'usinage (1) d'une chaîne de fabrication (10), dans lequel, pour l'amenée et/ou le positionnement des pièces de carrosserie sur chacun des deux côtés de la chaîne de fabrication (10) est prévu au moins un cadre de fixation (2) remplaçable, chaque cadre de fixation (2) étant déplaçable transversalement par rapport à la chaîne de fabrication (10) et étant disposé de façon à pouvoir éventuellement être levé et, pour assurer la conservation des cadres de fixation (2), étant prévu au moins un magasin à cadres de fixation (20), pour assurer le déplacement des cadres de fixation (2) dans la direction parallèle à la chaîne de fabrication (10), des deux côtés du poste d'usinage (1), étant prévus des chariots longitudinaux (3a, 3b) déplaçables le long d'une unité de guidage (5), par exemple une glissière, chariots longitudinaux sur lesquels peut être supporté un cadre de fixation (2) désolidarisable et verrouillable, pour assurer le déplacement des cadres de fixation (2), dans la direction transversale à la chaîne de fabrication (10), étant chaque fois prévu un chariot transversal (4) entraîné, déplaçable transversalement par rapport à la chaîne de fabrication (10) et sur lequel peut être supporté un cadre de fixation (2) désolidarisable et verrouillable et, à proximité directe du poste d'usinage (1), étant prévu un poste de transfert (B) pour transférer le cadre de fixation (2) du chariot longitudinal (3a, 3b) au chariot transversal (4) et inversement, **caractérisé en ce que**, dans la direction de la chaîne de fabrication (10), au moins sur un côté du poste d'usinage (2), sont prévus deux chariots longitudinaux (3a, 3b) pouvant être entraînés et pouvant être commandés indépendamment l'un de l'autre, les chariots longitudinaux étant déplaçables indépendamment l'un de l'autre de long de l'unité de guidage (5) dans la direction de la chaîne de fabrication (10), chaque chariot longitudinal étant agencé pour supporter un cadre de fixation (2) individuel, et les deux chariots longitudinaux (3a, 3b) étant déplaçables hors de la zone du poste d'usinage (1).

2. Dispositif selon la revendication 1, **caractérisé en ce que**, au moins sur un côté du poste d'usinage (1), dans la direction de la chaîne de fabrication (10), devant et/ou derrière le poste d'usinage (1), est disposé un magasin à cadres de fixation (20), et dans la zone de magasin à cadres de fixation (20) est prévue une position de changement de cadre de fixation (C) à laquelle un cadre de fixation (2), devenu inutile, peut être passé du chariot longitudinal (3a, 3b) dans le magasin de cadre de fixation (2) et/ou un cadre de fixation (2) quelconque peut être passé du magasin à cadres de fixation (20) aux chariots longitudinaux (3a, 3b).

3. Dispositif selon la revendication 2, **caractérisé en ce que** le magasin à cadres de fixation (20) est réalisé sous la forme de stockage en étagère en hauteur à- un ou plusieurs étages, pour lequel, sur chaque plan, est prévu au moins un emplacement de stockage (E, F, G) pour des cadres de fixation (2) et chaque plan présentant au moins un dispositif pour assurer le déplacement des cadres de fixation (2) transversalement et/ou longitudinalement par rapport à la chaîne de fabrication (10).

4. Dispositif selon la revendication 3, **caractérisé en ce que** le magasin à cadres de fixation (20) s'étend - en observant dans la direction de la chaîne de fabrication - des deux côtés de l'unité de guidage (5).

5. Dispositif selon la revendication 3 ou 4, **caractérisé en ce que** le magasin à cadres de fixation (20) présente un dispositif, de préférence une plate-forme de levage ou bien une table de levage, dispositif à l'aide duquel un cadre de fixation (2) peut être levé ou abaissé d'une position de levage (D) d'un plan quelconque, à la position de levage (D) d'un autre plan quelconque.

6. Dispositif selon la revendication 5, **caractérisé en ce que**, sur chaque plan au-dessus ou au-dessous du plan se trouvant au même niveau que la position de changement de cadre de fixation (C), le magasin à cadres de fixation (20) présente un dispositif de déplacement (8) des cadres de fixation (2), d'une position de levage (D), transversalement par rapport à la chaîne de fabrication (10), vers la chaîne de fabrication (10) et/ou, indépendamment de cela, présente un autre dispositif pour le déplacement (9) des cadres de fixation (2) depuis une position de levage (D) transversalement par rapport à la chaîne de fabrication (10), depuis la chaîne de fabrication (10), ces entraînements (8, 9) pouvant être entraînés et commandés indépendamment l'un de l'autre, et au moins un emplacement de stockage (F, G) pour un cadre de fixation (2) étant prévu transversalement par rapport à la chaîne de fabrication (10), devant et/ou derrière de position de levage (D).

7. Dispositif selon la revendication 6, **caractérisé en ce que**, sur chaque côté du poste d'usinage (1), dans la direction de la chaîne de fabrication (10), devant et derrière le poste d'usinage (1), est respectivement disposé à un magasin à cadres de fixation (20).

8. Dispositif selon l'une des revendications précédentes, **caractérisé en ce que** chaque chariot longitudinal (3a, 3b) est déplaçable dans un sens et dans l'autre individuellement, entre la position de changement de cadre de fixation (C) d'un magasin à cadres de fixation (20) et la position de transfert (B).

9. Dispositif selon la revendication 8, **caractérisé en ce que** les chariots longitudinaux (3a, 3b) sont déplaçables indépendamment l'un de l'autre depuis la zone du poste d'usinage (1) aux positions de changement de cadre de fixation (C) respectives, de manière que le poste d'usinage (1) soit accessible dans entrave.

10. Dispositif selon la revendication 9, **caractérisé en ce que**, dans le poste d'usinage (1), sur chacun des deux côtés, est prévue pour le cadre de fixation (2) une position de travail (A), à laquelle le cadre de fixation (2) est orienté exactement par rapport au poste d'usinage (1) et est ancré sur celui-ci.

11. Dispositif la revendication 10, **caractérisé en ce que** le cadre de fixation (2) est déplaçable, à l'aide du chariot transversal (4), de la position de transfert (B) à la position de travail (A) et inversement.

12. Dispositif selon la revendication 11, **caractérisé en ce que** chaque cadre de fixation (2) présente une alimentation en énergie, par exemple pour une énergie électrique et hydraulique ou pneumatique, qui, lors du transfert du cadre de fixation (2) des chariots longitudinaux (3a, 3b) aux chariots transversaux (4), est susceptible d'être couplée au chariot transversal (4) par un raccord, par exemple un raccord multiple.

13. Dispositif selon la revendication 12, **caractérisé en ce que**, pour les magasins à cadres de fixation (20) et pour les chariots longitudinaux (3a, 3b), est prévu un dispositif de commande au moyen duquel un déroulement temporel optimisé d'un changement de cadre de fixation peut être commandé.
